# EUROPEAN PATENT SPECIFICATION

(11) **EP 4 377 627 B1**
(45) Date of publication and mention of the grant of the patent: **02.07.2025**
(21) Application number: 22758191.5
(22) Date of filing: 28.07.2022
(51) Int. Cl.: F41H 11/16, A01B 59/06, B60D 1/00, B60D 1/167, B60D 1/26, B60D 1/54, A01B 59/00

(54) **HITCH**
KUPPLUNG
ATTELAGE

(30) Priority: 28.07.2021 GB 202110837
(43) Date of publication of application: 05.06.2024
(73) Proprietor: Pearson Engineering Limited, Newcastle upon Tyne, NE15 6UX (GB)
(72) Inventor: RIBY, Jason, Newcastle upon Tyne Tyne and Wear NE15 6UX (GB); TAYLOR, Jon, Newcastle upon Tyne Tyne and Wear NE15 6UX (GB)
(74) Representative: Bryers Intellectual Property Ltd
(86) International application number: PCT/EP2022/071170
(87) International publication number: WO 2023/006864

(56) References cited:
- EP-A2- 0 326 368
- CA-A1- 2 813 395
- FR-A- 909 874

## Description

The present invention relates generally to the attachment of implements to vehicles and particularly, although not exclusively, to a vehicle-to-equipment hitch.

A hitch system binds a prime mover and an implement into a single working unit. A hitch is a link through which the vehicle delivers tractive effort and/or torque in the form of pull or push to counteract a force from an implement or attachment. A hitch point (virtual or real) is the point on the vehicle (as an integral part or otherwise) through which the "line of push" must pass.

Real hitch points (RHP), e.g. a conventional car/trailer tow ball, cannot be positioned low to the ground, particularly on off-road vehicles, where they might come into contact with the ground causing damage such as disengagement of the hitch or reducing vehicle mobility.

Virtual hitch points (VHP) generated by linkage mechanisms e.g. 4 bar agricultural tractor hitches can be designed so the physical parts are high above ground but the VHP occurs in a different but desirable location e.g. very low to the ground. However, the VHP position moves as the linkage articulates possibly to other less desirable locations.

Known systems are described in CA 2 813 395 A1, FR 909 874 A and EP 0 326 368 A2.

The present invention seeks to provide improvements in or relating to hitching.

Some embodiments provide or relate to a vehicle to equipment hitch point.

The present invention provides a vehicle-to-implement hitch comprising a force transfer hitch connector adapted to provide a hitch point to which an implement can be connected, the hitch is movable between a stowed configuration and a deployed configuration and is deployable from a vehicle in use, wherein the hitch comprises at least one extendable actuator and at least two flexible tensioning members, whereby the flexible tensioning members and the actuator respectively connect the hitch point to different positions on a vehicle, whereby in the deployed position the tensioning members assume a generally triangular configuration with the hitch point formed at an apex thereof, whereby the actuator when being fully extended and exposed to an overload is no longer fully extended .

The tensioning members may be relaxed in the stowed configuration and taut in the deployed position.

Some embodiments provide a hitch that is stowed and then deployed.

Some embodiments provide a hitch at a desirable location that in some circumstances can move away from that location; one alternative location might be a stowed position.

Some embodiments of the present invention enable the creation of a hitch point in previously unoccupied space.

In embodiments of the present invention the hitch location could, for example, be provided as or generally in the form of a point or an axis.

The hitch location could, for example, be provided as or generally in the form of a ball joint, a Hooke's joint, a universal joint, or a pin joint.

The form of the hitch may remove one or more degrees of freedom from a hitch location e.g. one or two rotational degrees of freedom.

When overloaded the hitch may be configured to permit translation. Rotational degrees of freedom may be unchanged in an overload situation.

The connector may, for example, be a boom. In some embodiments the boom can articulate.

The connector may form part of the hitch location.

The connector may be "forward" (e.g. in advance of) the hitch location.

The hitch may further comprise one or more actuators for moving the hitch from the stowed to the deployed configuration.

In some embodiments the hitch comprises a first actuator for moving the tensioning member/s to the deployed position and a second actuator for moving the connector to a deployed position.

In embodiments with multiple actuators the actuators may, for example, deploy in sequence or simultaneously. For example, in one embodiment the tensioning member/s are fully deployed followed by deployment of the connector.

A hitch point may be, provide or form part of a real or virtual hitch point.

The or each actuator may be pre-charged and stored energised.

The or each actuator may be connected or connectable to an external power source.

The or each actuator may be a gas strut.

The or each tensioning/tensionable member may be a cable, rope, strap, cord, chain or the like.

The or each tensioning/tensionable member may be a wire rope.

The or each tensioning/tensionable member may be a telescoping cylinder.

Excess member length may be controlled to ensure they pack neatly; for example excess length may be controlled by additional weak springs or weak restraints.

Taut ropes may be used to provide lateral stiffness (i.e. into / out of the plane of the figures) to the mechanisms.

Some embodiments may be based on the use of flexible elements such and cables, ropes or chains, which become rigid in tension after the deployment event.

Some embodiments provide a hitch point formed as part of a triangular linkage, with the hitch point formed at/by an apex.

Some embodiments form a hitch point in space using actuators and rope.

In some embodiments a hitch point is formed by two tautable cables and a gas spring.

Some embodiments provide a hitch point that is movable in the event of an overload.

The hitch point may be or form part of a generally triangular linkage, with, for example, the hitch point itself being formed at a tip of the triangle.

The hitch may comprise means for locking the mechanism, or parts of the mechanism, into the stowed position.

The present invention also provides a hitch as described herein in combination with a vehicle.

Hitches may be provided and the front and/or rear of a vehicle. For example, the hitch may be configured for use with front end equipment, such as equipment to be used in conjunction with a military vehicle (such as a plough or dozer blade).

The present invention also provides a mine clearance system comprising a vehicle provided with one or more hitches or hitch mechanisms as defined herein, and a surface clearance implement connected to the vehicle via the hitch/es or hitch mechanism/s.

In some embodiments the hitch point may be configured to be very low to the ground, which despite being very low is tolerant to striking the ground if this occurs.

The principles of the present invention allow for creation of structural members in a location that could not be achieved when the equipment is stowed without detriment to the host vehicle. This can provide for optimised hitch point characteristics that could not be achieved with permanently located structures.

The lightweight structure may be loaded beyond the limits of typical equipment. The nature of the flexible elements allows for a controlled overload without damage to the equipment. This provides for optimised load bearing characteristics, strength and weight with reduced risk of damage to the operational parts.

The pseudo-rigid structure provides for a controlled over-load reaction from which the structure can recover without damage.

Some embodiments of the present invention provide a surface clearance device, such as an implement for the clearance of surface laid or scattered mines, in a lightweight and compact system.

Surface clearance devices can be powerful but bulky and heavy pieces of equipment which, when fitted, reduce the capability of the host vehicle. They are often very strong and capable they can be a considerable size, even when not in use.

Some embodiments provide a rigid, deployable structure which is deployed from a compact, stowed configuration using actuators (such as gas struts) and flexible members (such as wire rope) which becomes rigid when tensioned and create a real hitch point (RHP) at its extremity. The resulting structure is able to collapse if it does hit an obstacle such as the ground and then re-form after passing the obstacle, temporarily moving the RHP only if required in this situation.

Some embodiments of this invention allows, for example, a mine clearance device to be fitted to nearly any vehicle with minimal impact. It could, for example, be worn as a "life-jacket" to protect against attack of scatterable mines, without the need for heavy engineering vehicles to accompany. The solution could be applied to front-line combat vehicles and to logistics vehicles, equally.

In some embodiments the mechanism can collapse upwards if it strikes the ground and rearwards if draft force is too high. Alternatively or additionally the mechanism may also protect if reversing and draft force were too high in that direction, then it may deflect forwards.

Some embodiments provide or relate to a 2-dimensional 2 rope principle in which the hitch point can move anywhere it needs to if it is overloaded in a space defined by 2 radii - the taut lengths of the 2 cables (assuming it is also constrained to stay in a 2D plane).

Some embodiments have multiple sets of this 2-dimensional mechanism. In other embodiments a 3-dimensional mechanism with 3 ropes and one actuator tensioning them may, for example, be provided. In that case the hitch point can move, if overloaded, anywhere in a 3D envelope created from 3 radii of 3 rope lengths.

The pseudo-rigid structure of some embodiments provides for a controlled over-load reaction from which the structure can recover without damage. In some embodiments this works for 3D as well as 2D and overloads in any direction within a geometric envelop defined by the taut members.

Some embodiments provide or relate to a 2D envelope in which a hitch point can move. The same logic may apply in 3D, but the envelope is more complex.

Different aspects and embodiments of the invention may be used separately or together.

Further particular and preferred aspects of the present invention are set out in the accompanying independent and dependent claims. Features of the dependent claims may be combined with the features of the independent claims as appropriate, and in combinations other than those explicitly set out in the claims.

The present invention is more particularly shown and described, by way of example, in the accompanying drawings, in which:

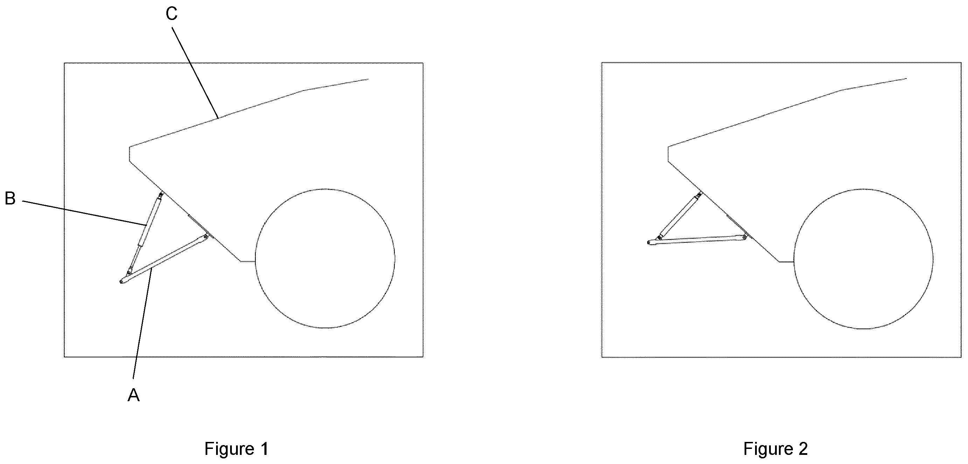

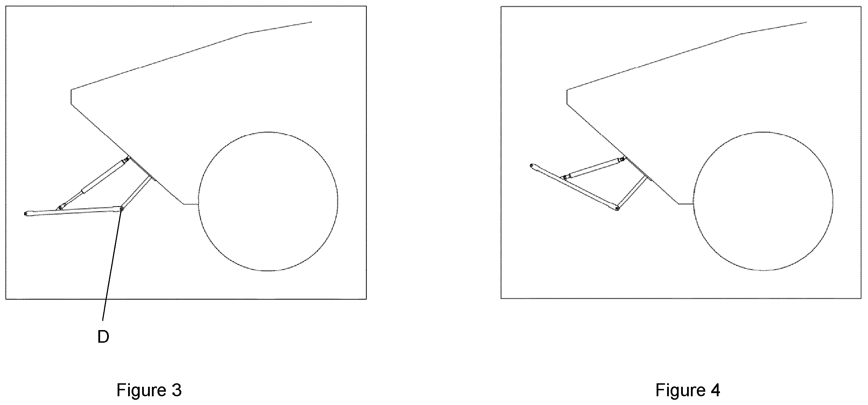

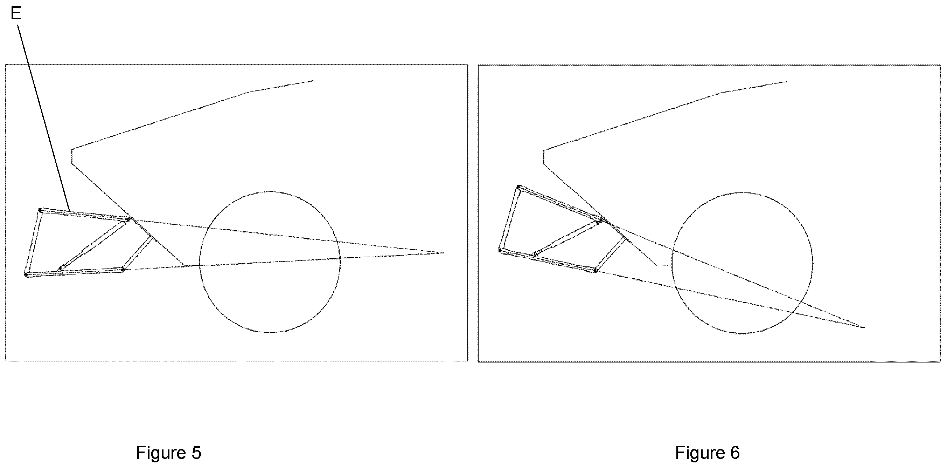

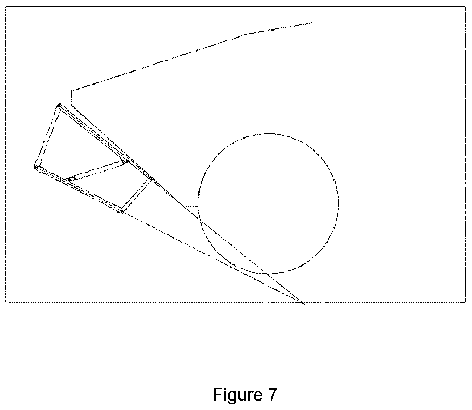

Figures 1 to 7 - hitch point information and discussion.
Figure 8 - the hitch point deployment structure in a stowed position.
Figure 9 - the deployment structure in a deployed position.
Figure 10 - the hitch point in an intermediate position.
Figure 11 - the deployment structure in the fully deployed position.
Figure 12 - the deployment structure as if an overload force has been applied to the front of the boom.
Figure 13 - the deployment structure as if the boom strikes an immovable object and the hitch point deflects upwards, or in any other direction.
Figure 14 and Figure 15 - stowed and deployed positions of a hitch formed according to a further embodiment.
Figure 16 - illustrate that if the structure of Figure 15 is overloaded from excessive draught force it can deflect rearwards and can be made to recover the original position.
Figure 17 - illustrates that if the structure of Figure 15 strikes an immovable object, such as debris or extreme undulations in the ground surface, the structure is able to deflect upwards, or in any other direction and can be made to recover the original position.
Figure 18 - a 2D system comprising one actuator and two ropes.
Figures 19 to 22 - a 3D system comprising three tautable ropes.

The example embodiments are described in sufficient detail to enable those of ordinary skill in the art to embody and implement the systems and processes herein described. It is important to understand that embodiments can be provided in many alternative forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In the description, all orientational terms, such as upper, lower, radially and axially, are used in relation to the drawings and should not be interpreted as limiting on the invention.

### Figure 1

A simple "Real Hitch Point" where a boom (A) is directly attached to a vehicle (B) with a rigid connection (C), shown in the working position, with a tool (not shown) lowered to the ground. It is simple and lightweight but the angle of the boom directs the weight of the vehicle in to the tool and when subject to a large draught force the tool will be pressed in to the ground with greater force.

### Figure 2

The Real Hitch Point is also limited by the stowed position. The tool can be raised from the ground but the equipment cannot be returned to a compact stowed position in such a simple implementation.

### Figure 3

A Real Hitch Point can be improved by moving the connection point D lower to the ground. This limits the undesirable force increase and ground pressure, when subjected to a large draught force. The undesirable consequence of the low connection point is a reduction in ground clearance.

### Figure 4

This simple implementation has a similar limitation on the compactness of the stowed position. The tool can be raised but compact stowage is not possible.

All of these hitch points may allow the tool to pivot freely and contour the ground, the tool may be rigidly attached to the boom, in which case the tool will rotate with the boom, or the tool may pivot on the end of the boom and be controlled by an additional actuator.

### Figure 5/6

A further development of a low hitch point could be the 3-point hitch or a "virtual hitch point" where an additional, upper boom E is added, which is also pivotably connected to the tool. This control the pitch angle of the tool but also directs the forces through a point (represented in the figure) by the meeting of the dashed lines. This allows the draught forces subjected to the tool and the vehicle to be carefully controlled. The location of the hitch point will move slightly through the working position of the tool.

### Figure 7

The 3-point hitch is still limited in how much it can be compactly stowed.

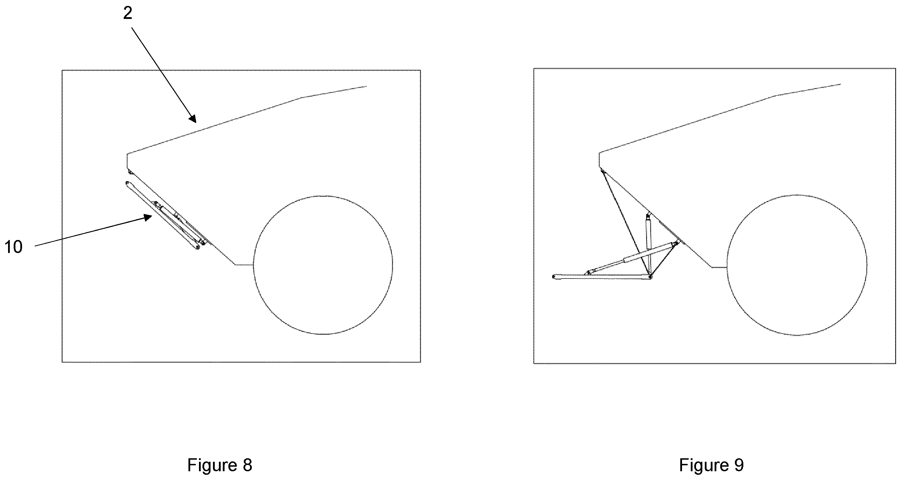

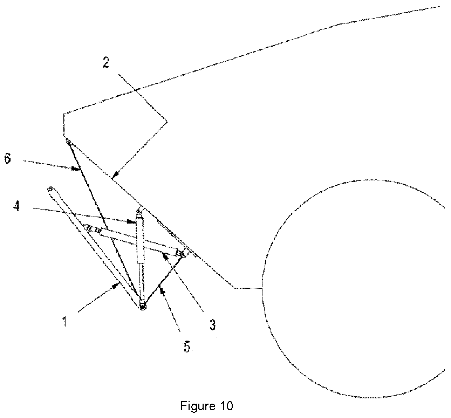

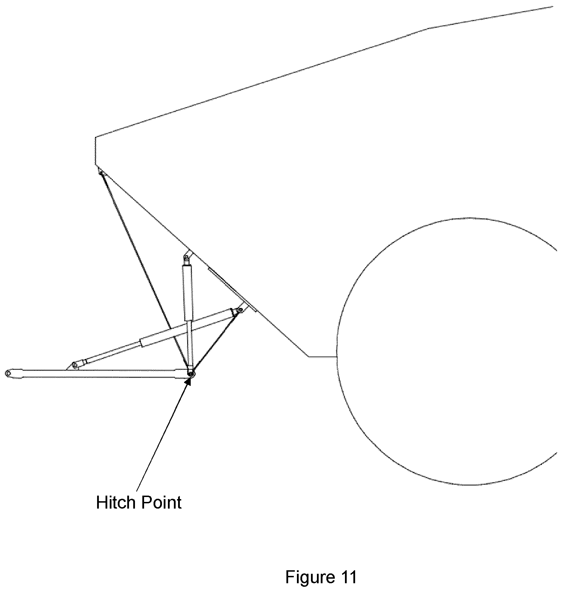

Figures 8 to 11 illustrate a hitch mechanism 10 formed in accordance with the present invention and shown coupled to a host vehicle 2 in a stowed (Figure 8), intermediate (Figure 10) deployed (Figures 9 and 11) position.

The hitch mechanism is initially stowed up close to the host vehicle (Figure 8). Actuators (3) and (4) are compressed. These may be pre-charged and stored energised or may be connected to an external power source. Ropes (5) and (6) and actuator (4) connect the rear of the boom (1) to the vehicle (2) in a forward and rearward position. The ropes are essentially slack in the stowed position but their excess length may be controlled by additional weak springs or weak restraints to ensure they pack neatly.

A facility to lock the mechanism, or parts of the mechanism, into the stowed position may or may not be required/provided.

When the system is released, actuator (4) is commanded to move and extends (Figure 10); the mechanism starts to deploy (Figure 10). This moves the rear end of the boom (1) to a low, stable position about which the boom can pivot during operations; a real hitch point (RHP) has been formed.

Latterly, the second actuator (3) is commanded to move. This lowers the boom (1) and any attached ground-clearing tools or other equipment to the ground (Figure 11). In the case of ground clearing tools it can applied a near-constant "pushdown" force, while able to contour the ground.

In some ways this arrangement can be thought of as a pin-jointed triangle. The ropes are only capable of transmitting tension and the actuator (4) serves as a strut between them, connecting common ends of the ropes at an apex which then creates the hitch point in space.

The use of ropes, wires or the like and actuators allows a simple system using a real hitch point in the ideal location to be generated, where the forces subjected to equipment and vehicle and minimised.

The use of ropes, wires or the like and actuators allows the rigid structure to be collapsed for compact stowage.

There may be multiple sets of this 2-dimensional mechanism across the width of the vehicle.

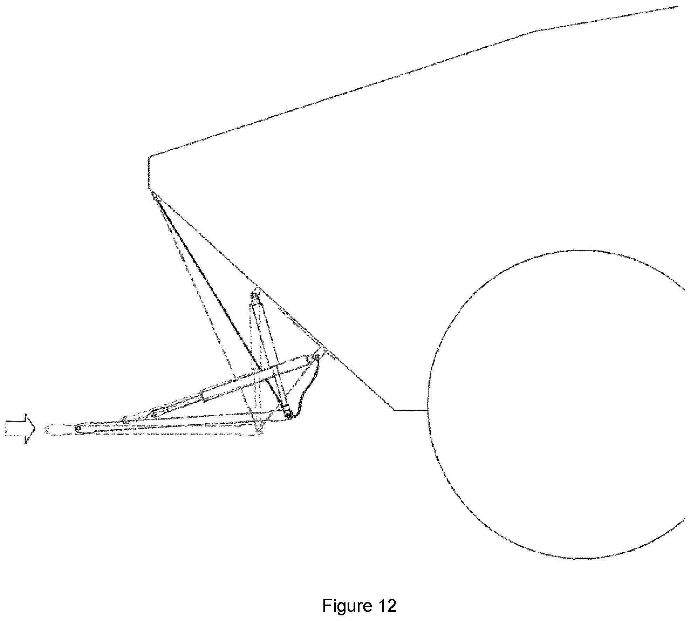

If the structure is overloaded from excessive draught force, the structure can deflect rearwards (see Figure 12) and can be made to recover the original position.

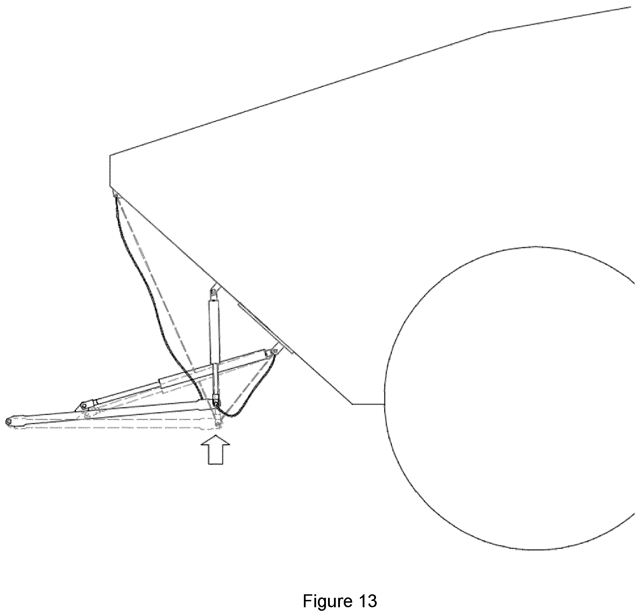

If the structure strikes an immovable object, such as debris or extreme undulations in the ground surface, the structure is able to deflect upwards, or in any other direction (see Figure 13) and can be made to recover the original position.

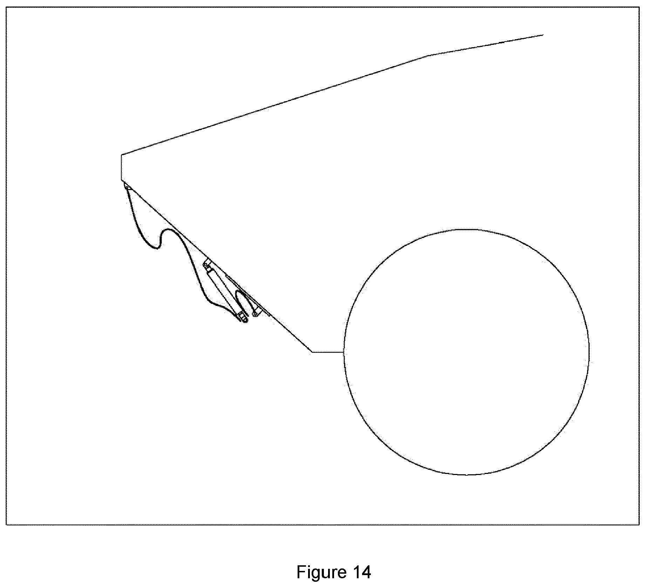

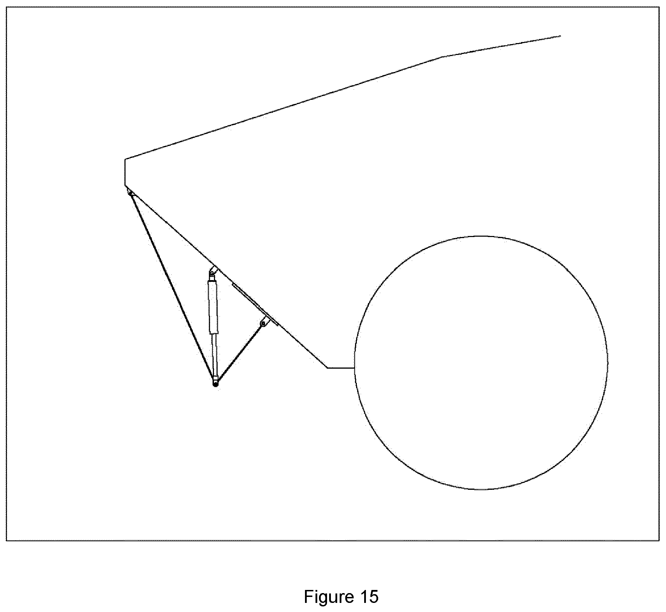

Figure 14 and Figure 15 show stowed and deployed positions of a hitch formed according to a further embodiment. The hitch point actuator and ropes are shown. Figure 15 illustrates the generation of the hitch point using the actuator and the ropes.

The hitch point is a point in the generally triangular linkage. It could be considered as a real hitch point, but it is movable in the event of an overload - see below.

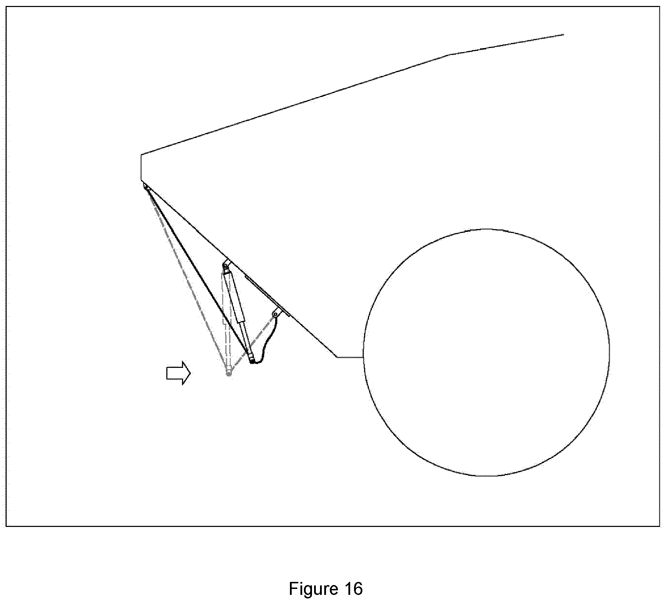

If the structure is overloaded from excessive draught force, the structure can deflect rearwards (see Figure 16) and can be made to recover the original position.

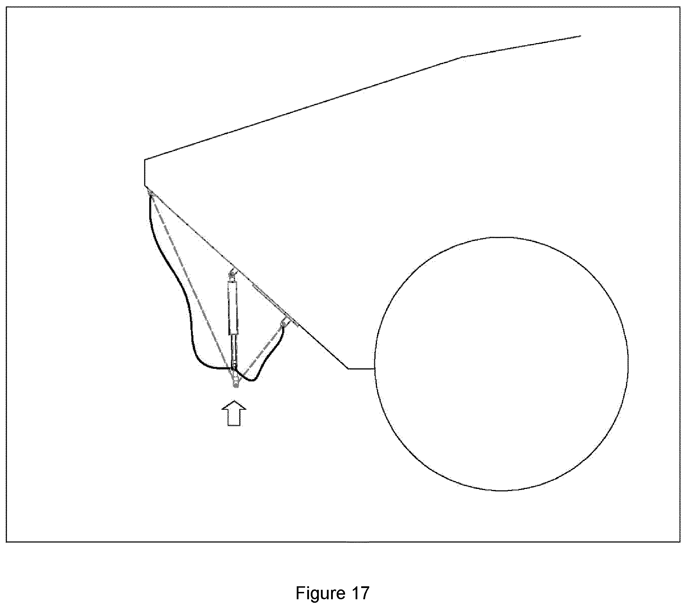

If the structure strikes an immovable object, such as debris or extreme undulations in the ground surface, the structure is able to deflect upwards, or in any other direction (see Figure 17) and can be made to recover the original position.

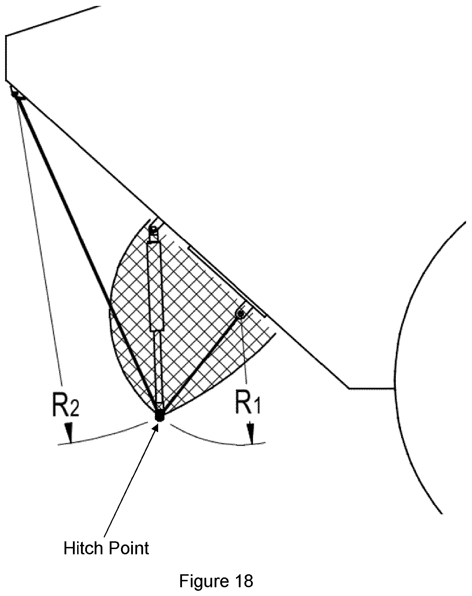

A simple 2D system is illustrated in Figure 18 comprising one actuator and two ropes, assumed to act in a plane. The two rope radii (R₁ and R₂) are marked. The hitch point when fully deployed is at the vertex. If one rope is slack then the hitch point will move along one edge. If both ropes are slack the hitch location (e.g. hitch point) will be located inside the hatched area. Note the similarities between Figure 18 and Figures 15.

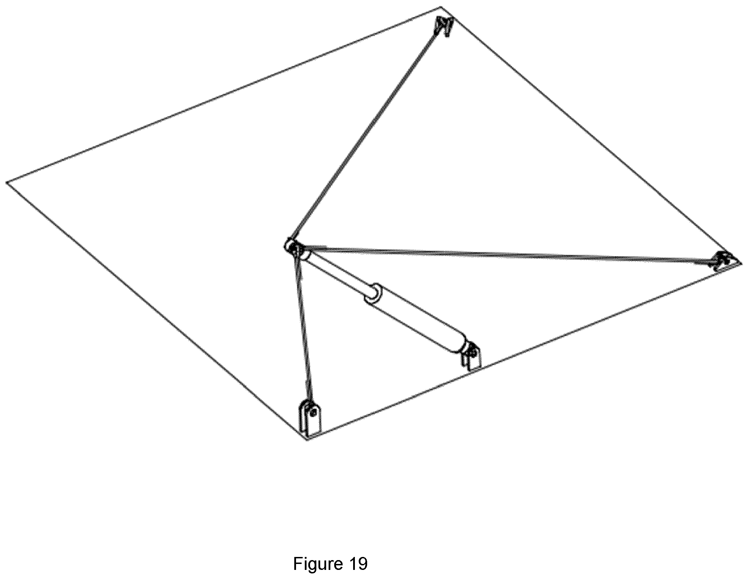

Referring now to Figures 19 to 22 a generic 3D embodiment is shown, including three taut cables from three corners of the rectangular plate (the vehicle front) individually create three spherical surfaces and the hitch point is able to move within the common volume of these three spheres. i.e. the hitch moves over the surfaces show when two of the cables are slack and one taut. It moves along the lines where two surfaces interest when one cable is slack. And the hitch point is at the point where the three surfaces meet when all the cables are taut. When all three cables are slack, the hitch location is somewhere inside this surface envelope.

Figure 19 illustrates an assembly of three ropes and an actuator to tension them.

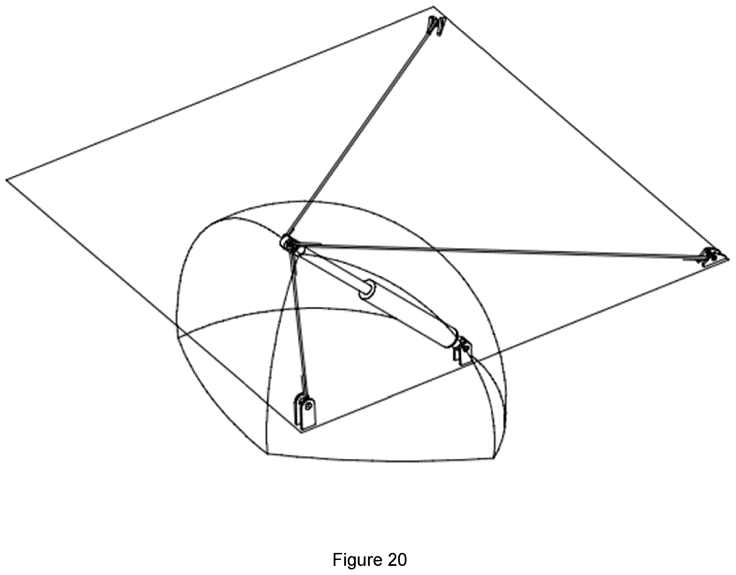

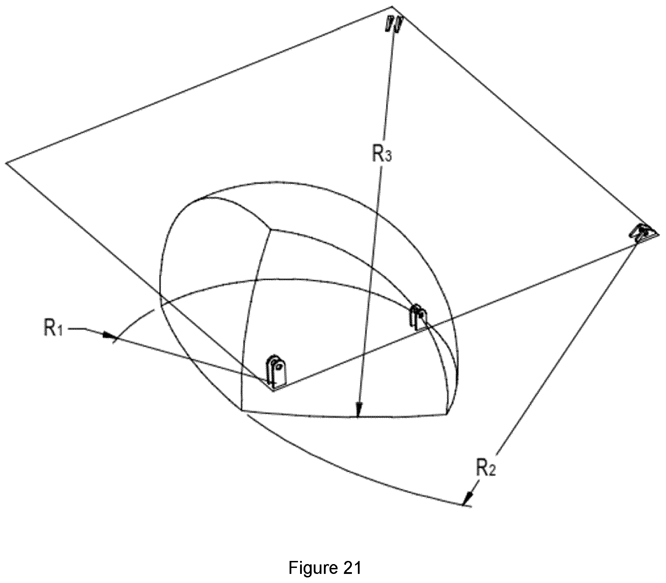

Figure 20 illustrates a 3Dshape envelope showing possible positions of hitch point, should the actuator be overloaded and rope/s become slack. Figure 21 further draws attention to the radius of each face, which is generated by a rope.

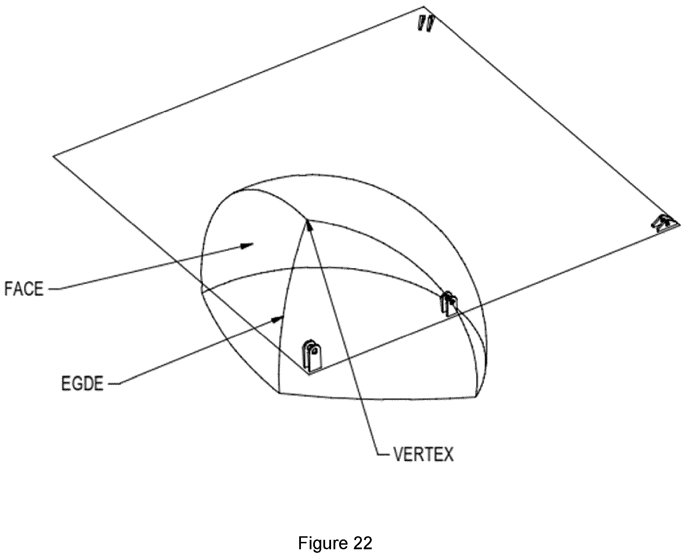

In Figure 22 the key points of the shape are labelled, explaining the possible positions of hitch location:
a. If the actuator is fully extended then all ropes are taut and the hitch location is located at the "vertex"
b. If the actuator is overloaded and is no longer fully extended the hitch point location is undefined:
   i. If one rope is slack then the hitch point is located along one "edge" (n.b. there are three edges on the diagram)
   ii. If two ropes are slack then the hitch point is located one "face" (n.b. there are three faces on the diagram)
   iii. If all ropes are slack then the hitch point is located inside the volume.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

## Claims

1. A vehicle-to-implement hitch comprising a force transfer hitch connector adapted to provide a hitch point to which an implement can be connected, the hitch is movable between a stowed configuration and a deployed configuration and is deployable from a vehicle in use, wherein the hitch comprises at least one extendable actuator (4), **characterised in that** the hitch furthermore comprises at least two flexible tensioning members (5, 6), whereby the flexible tensioning members and the actuator respectively connect the hitch point to different positions on a vehicle, whereby in the deployed position the tensioning members assume a generally triangular configuration with the hitch point formed at an apex thereof, whereby the actuator when being fully extended and exposed to an overload is no longer fully extended.

2. A hitch as claimed in claim 1, in which the connector is a boom (1) connected to the hitch point.

3. A hitch as claimed in claim 1 or claim 2, in which the hitch location is real.

4. A hitch as claimed in claim 1 or claim 2, in which the hitch location is a pivot point that is part of a linkage that forms a virtual hitch point.

5. A hitch as claimed in any preceding claim, in which the connector is in advance of the hitch location.

6. A hitch as claimed in any preceding claim, in which the connector is part of the hitch point.

7. A hitch as claimed in any preceding claim, further comprising one or more actuators for moving the hitch from the stowed to the deployed configuration.

8. A hitch as claimed in claim 7, in which the or each actuator is pre-charged and stored energised and/or in which the or each actuator is connected or connectable to an external power source.

9. A hitch as claimed in claim 7 or claim 8, comprising a plurality of actuators and in which actuators deploy in sequence or in which actuators deploy simultaneously.

10. A hitch as claimed in any preceding claim, in which each tensioning member is a cable, rope, strap, cord, chain or the like.

11. A hitch as claimed in any preceding claim, in which the flexible tensioning members comprise two or three ropes.

12. A hitch as claimed in any preceding claim and comprising means for locking the mechanism, or parts of the mechanism, into the stowed position.

13. A hitch as claimed in any preceding claim, formed as a 2D mechanism or formed as a 3D mechanism.

14. A hitch according to any preceding claim in combination with a vehicle.

15. A mine clearance system comprising a hitch according to any preceding claim and a surface clearance implement connected to the vehicle via the hitch.

## Patentansprüche

1. Anhängevorrichtung zwischen Fahrzeug und Arbeitsgerät, umfassend einen Kraftübertragungsverbinder der Anhängevorrichtung, der dazu ausgelegt ist, einen Anhängevorrichtungspunkt bereitzustellen, mit dem ein Arbeitsgerät verbunden werden kann, wobei die Anhängevorrichtung zwischen einer verstauten Konfiguration und einer entfalteten Konfiguration beweglich ist und im Gebrauch von einem Fahrzeug entfaltet werden kann, wobei die Anhängevorrichtung mindestens einen ausfahrbaren Aktuator (4) umfasst, **dadurch gekennzeichnet, dass** die Anhängevorrichtung ferner mindestens zwei flexible Spannelemente (5, 6) umfasst, wobei die flexiblen Spannelemente und der Aktuator jeweils den Anhängevorrichtungspunkt mit unterschiedlichen Positionen an einem Fahrzeug verbinden, wobei in der entfalteten Position die Spannelemente eine im Allgemeinen dreieckige Konfiguration annehmen, wobei der Anhängevorrichtungspunkt an einer Spitze davon ausgebildet ist, wobei der Aktuator, wenn er vollständig ausgefahren und einer Überlast ausgesetzt wird, nicht mehr vollständig ausgefahren ist.

2. Anhängevorrichtung nach Anspruch 1, wobei der Verbinder ein Ausleger (1) ist, der mit dem Anhängevorrichtungspunkt verbunden ist.

3. Anhängevorrichtung nach Anspruch 1 oder Anspruch 2, wobei die Anhängevorrichtungsposition real ist.

4. Anhängevorrichtung nach Anspruch 1 oder Anspruch 2, wobei die Anhängevorrichtungsposition ein Drehpunkt ist, der Teil eines Gestänges ist, das einen virtuellen Anhängevorrichtungspunkt bildet.

5. Anhängevorrichtung nach einem der vorhergehenden Ansprüche, wobei sich der Verbinder vor der Anhängevorrichtungsposition befindet.

6. Anhängevorrichtung nach einem der vorhergehenden Ansprüche, wobei der Verbinder Teil des Anhängevorrichtungspunkts ist.

7. Anhängevorrichtung nach einem der vorhergehenden Ansprüche, ferner umfassend einen oder mehrere Aktuatoren zum Bewegen der Anhängevorrichtung von der verstauten in die entfaltete Konfiguration.

8. Anhängevorrichtung nach Anspruch 7, wobei der oder jeder Aktuator vorgeladen und mit gespeicherter Energie versehen ist und/oder wobei der oder jeder Aktuator mit einer externen Leistungsquelle verbunden oder verbindbar ist.

9. Anhängevorrichtung nach Anspruch 7 oder Anspruch 8, umfassend mehrere Aktuatoren und wobei sich die Aktuatoren nacheinander entfalten oder wobei sich die Aktuatoren gleichzeitig entfalten.

10. Anhängevorrichtung nach einem der vorhergehenden Ansprüche, wobei jedes Spannelement ein Kabel, ein Seil, ein Riemen, ein Gurt, eine Kette oder dergleichen ist.

11. Anhängevorrichtung nach einem der vorhergehenden Ansprüche, wobei die flexiblen Spannelemente zwei oder drei Seile umfassen.

12. Anhängevorrichtung nach einem der vorhergehenden Ansprüche und umfassend Mittel zum Verriegeln des Mechanismus oder von Teilen des Mechanismus in die verstaute Position.

13. Anhängevorrichtung nach einem der vorhergehenden Ansprüche, die als ein 2D-Mechanismus ausgebildet ist oder als ein 3D-Mechanismus ausgebildet ist.

14. Anhängevorrichtung nach einem der vorhergehenden Ansprüche in Kombination mit einem Fahrzeug.

15. Minenräumsystem, umfassend eine Anhängevorrichtung nach einem der vorhergehenden Ansprüche und ein Oberflächenräumanbaugerät, das über die Anhängevorrichtung mit dem Fahrzeug verbunden ist.

## Revendications

1. Attelage véhicule-outil comprenant un raccord d'attelage à transfert de force conçu pour fournir un point d'attelage auquel un outil peut être relié, l'attelage étant mobile entre une configuration rangée et une configuration déployée et pouvant être déployé à partir d'un véhicule lors de l'utilisation, l'attelage comprenant au moins un actionneur extensible (4), **caractérisé en ce que** l'attelage comprend en outre au moins deux éléments de tension flexibles (5, 6), moyennant quoi les éléments de tension flexibles et l'actionneur relient respectivement le point d'attelage à différentes positions sur un véhicule, moyennant quoi, en position déployée, les éléments de tension prennent une configuration généralement triangulaire, le point d'attelage étant formé à leur sommet, moyennant quoi l'actionneur lorsqu'il est complètement étendu et exposé à une surcharge n'est plus complètement étendu.

2. Attelage selon la revendication 1, le raccord étant un bras (1) relié au point d'attelage.

3. Attelage selon la revendication 1 ou 2, l'emplacement d'attelage étant réel.

4. Attelage selon la revendication 1 ou la revendication 2, l'emplacement d'attelage étant un point de pivot faisant partie d'une liaison qui forme un point d'attelage virtuel.

5. Attelage selon l'une quelconque des revendications précédentes, le raccord étant en avance de l'emplacement d'attelage.

6. Attelage selon l'une quelconque des revendications précédentes, le raccord faisant partie du point d'attelage.

7. Attelage selon l'une quelconque des revendications précédentes, comprenant en outre un ou plusieurs actionneurs pour faire passer l'attelage de la configuration rangée à la configuration déployée.

8. Attelage selon la revendication 7, le ou chaque actionneur étant préchargé et stocké sous tension et/ou le ou chaque actionneur étant connecté ou pouvant être connecté à une source d'énergie externe.

9. Attelage selon la revendication 7 ou la revendication 8, comprenant une pluralité d'actionneurs et les actionneurs se déployant en séquence ou les actionneurs se déployant simultanément.

10. Attelage selon l'une quelconque des revendications précédentes, chaque élément de tension étant un câble, une corde, une sangle, un cordon, une chaîne ou similaire.

11. Attelage selon l'une quelconque des revendications précédentes, les éléments de tension flexibles comprenant deux ou trois cordes.

12. Attelage selon l'une quelconque des revendications précédentes et comprenant un moyen pour verrouiller le mécanisme, ou des parties du mécanisme, en position rangée.

13. Attelage selon l'une quelconque des revendications précédentes, formé comme un mécanisme 2D ou formé comme un mécanisme 3D.

14. Attelage selon l'une quelconque des revendications précédentes en association avec un véhicule.

15. Système de déminage comprenant un attelage selon l'une quelconque des revendications précédentes et un outil de déminage de surface relié au véhicule par l'intermédiaire de l'attelage.
